# EUROPEAN PATENT SPECIFICATION

(11) **EP 3 116 283 B1**
(45) Date of publication and mention of the grant of the patent: **28.08.2019**
(21) Application number: 15772582.1
(22) Date of filing: 07.04.2015
(51) Int. Cl.: H04W 28/16

(54) **BACKHAUL LINK ADJUSTMENT METHOD, MOBILE NODE AND SYSTEM**
BACKHAUL-LINK-ANPASSUNGSVERFAHREN, MOBILKNOTEN UND SYSTEM
PROCÉDÉ D'AJUSTEMENT DE LIAISON DE RACCORDEMENT, NOEUD MOBILE ET SYSTÈME

(30) Priority: 04.04.2014 CN 201410135984
(43) Date of publication of application: 11.01.2017
(73) Proprietor: Huawei Technologies Co., Ltd., Longgang District Shenzhen, Guangdong 518129 (CN)
(72) Inventor: CHEN, Xueliang, Shenzhen Guangdong 518129 (CN); XIE, Yong, Shenzhen Guangdong 518129 (CN); CHEN, Jun, Shenzhen Guangdong 518129 (CN)
(74) Representative: Körber, Martin Hans
(86) International application number: PCT/CN2015/076001
(87) International publication number: WO 2015/149725

(56) References cited:
- WO-A1-2013/079556
- CN-A- 101 895 987
- CN-A- 101 969 669
- CN-A- 102 056 242
- CN-A- 102 474 770

## Description

### TECHNICAL FIELD

The present invention relates to the field of communications technologies, and in particular, to a backhaul link adjustment method, a mobile node, and a system.

### BACKGROUND

With continuous development of communications technologies, a requirement for movement of network nodes is put forward, for example, in some scenarios such as large venues and tour services, and deployment of some emergency services and experience of mobile services need to be provided for users.

In these scenarios in which the network nodes need to move, the network nodes need to independently move to appropriate locations according to network load and a change of a service, and automatically form a dynamic self-adaptive network, to effectively satisfy requirements of users. Especially when an access service changes or a network node moves to another location, there is a new requirement on data forwarding, such as increasing the amount of forwarded data or changing a data backhaul path.

CN 102056242 A discloses the idea of controlling the flow of a backhaul link. Thereby, a relay node (RN) acquires a downlink data traffic measurement result; the RN judges whether the downlink data traffic measurement result meets a preset trigger condition, wherein the trigger condition is used for triggering to send a downlink speed adjustment request; when the RN judges that the downlink data traffic measurement result meets the preset trigger condition, the RN sends the downlink speed adjustment request to a donor evolved node B (DeNB), so that the DeNB adjusts the downlink data scheduling and transmission on the backhaul link according to the downlink speed adjustment request; and otherwise, the RN doesn't send the downlink speed adjustment request to the DeNB. The invention avoids the mismatch of data stream between the backhaul link and the access link, so as to solve the problem of downlink data congestion of the RN or downlink data delay of the relay user equipment (R-UE), as well as the problem of waste of the resources on the backhaul link.

CN 101969669 A discloses the idea of adjusting data volume in wireless communication technology by following scheme: a relay node (RN) device determines traffic scheduling parameter according to the volume of the downlink cache data; the RN device sends the traffic scheduling parameter to a base station and requests the base station to adjust the data volume of the downlink backhaul link according to the traffic scheduling parameter. According to the teaching of this document, delay of the downlink data can be reduced and the efficiency of data transmission and the system performance can be increased.

However, in the prior art, a network node is usually fixed or rarely moves, a backhaul (backhaul) link of the network node is usually fixed, and the amount of data forwarded by the network node and a data backhaul path of the network node are also fixed, which cannot satisfy a requirement of a mobile network node on data forwarding in a movement scenario. It can be seen that a technical problem that a backhaul link cannot satisfy a data forwarding requirement of a mobile network node in a movement scenario exists in the prior art.

### SUMMARY

Embodiments of the present invention provide a backhaul link adjustment method, a mobile node, and a system, to resolve a technical problem in the prior art that a backhaul link cannot satisfy a data forwarding requirement of a mobile network node in a movement scenario.

The reader is referred to the appended independent claims. Some preferred features are laid out in the dependent claims.

According to a first aspect, the present invention provides a mobile node, where the mobile node includes:
a processor, configured to obtain current operating status information that indicates a current operating status of the mobile node;
a transmitter, configured to send, based on the current operating status information, an adjustment request used to adjust a backhaul link between the mobile node and a backhaul node to the backhaul node; and
a receiver, configured to receive feedback information sent by the backhaul node, where the feedback information includes a backhaul resource allocated to the mobile node, where
the processor is further configured to adjust the backhaul link based on the backhaul resource; and wherein
the receiver is further configured to receive a movement instruction sent by a server, and determine a current location, a current movement speed, and a current movement direction of the mobile node; and
the processor is further configured to obtain, based on the current location, the current movement speed, and the current movement direction, at least one candidate backhaul node whose distance from the mobile node is less than or equal to a specified threshold in a movement process; and determine, based on the current operating status information, the backhaul node in the at least one candidate backhaul node.

### excised

With reference to the first aspect, in a first possible implementation manner, the current operating status information specifically includes at least one of the following information:
current quality of service information, current service traffic information, current bandwidth requirement information, or current electricity quantity information of the mobile node.

With reference to the first aspect or the first possible implementation manners, in a second possible implementation manner, when the current operating status information is the current electricity quantity information, the processor is further configured to obtain current remaining work time corresponding to the current electricity quantity information and a expected current bandwidth value corresponding to the current remaining work time; and add the expected current bandwidth value to the adjustment request; and
the transmitter is specifically configured to send, to the backhaul node, the adjustment request that carries the expected current bandwidth value, so that the backhaul node can adjust a backhaul bandwidth in the backhaul resource based on the expected current bandwidth value.

According to a second aspect, an embodiment of this application provides a backhaul link adjustment method, applied to a mobile node, where the method includes:
obtaining, by the mobile node, current operating status information used to indicate a current operating status of the mobile node;
sending, by the mobile node based on the current operating status information, an adjustment request used to adjust a backhaul link between the mobile node and a backhaul node to the backhaul node;
receiving, by the mobile node, feedback information sent by the backhaul node, where the feedback information includes a backhaul resource allocated to the mobile node; and
adjusting, by the mobile node, the backhaul link based on the backhaul resource; and wherein before the sending, by the mobile node based on the current operating status information, an adjustment request used to adjust a backhaul link to a backhaul node, the method further includes:
receiving, by the mobile node, a movement instruction sent by a server, and determining a current location, a current movement speed, and a current movement direction of the mobile node;
obtaining, by the mobile node based on the current location, the current movement speed, and the current movement direction, at least one candidate backhaul node whose distance from the mobile node is less than or equal to a specified threshold in a movement process; and
determining, by the mobile node based on the current operating status information, the backhaul node in the at least one candidate backhaul node.

With reference to the second aspect, in a first possible implementation manner, the current operating status information specifically includes at least one of the following information:
current quality of service information, current service traffic information, current bandwidth requirement information, or current electricity quantity information of the mobile node.

With reference to the second aspect or the first possible implementation manners, in a second possible implementation manner, when the current operating status information is the current electricity quantity information, the sending, by the mobile node based on the current operating status information, an adjustment request for adjusting a backhaul link to a backhaul node specifically includes:
obtaining, by the mobile node, current remaining work time corresponding to the current electricity quantity information and a expected current bandwidth value corresponding to the current remaining work time; and
adding, by the mobile node, the expected current bandwidth value to the adjustment request, and sending the adjustment request to the backhaul node, so that the backhaul node can adjust a backhaul bandwidth in the backhaul resource based on the expected current bandwidth value.

According to a third aspect, an embodiment of this application provides a backhaul link adjustment system, where the system includes:
a backhaul node; and
a mobile node, connected to the backhaul node and a mobile terminal, where the mobile node transmits, to a network by using the backhaul node, data sent by the mobile terminal, where
the mobile node is configured according to the first aspect.

With reference to the third aspect, in a first possible implementation manner, the current operating status information specifically includes at least one of the following information:
current quality of service information, current service traffic information, current bandwidth requirement information, or current electricity quantity information of the mobile node.

With reference to the third aspect or the first possible implementation manners, in a second possible implementation manner, when the current operating status information is the current electricity quantity information, the sending, based on the current operating status information, an adjustment request for adjusting a backhaul link to the backhaul node specifically includes:
obtaining, by the mobile node, current remaining work time corresponding to the current electricity quantity information and a expected current bandwidth value corresponding to the current remaining work time; and
adding, by the mobile node, the expected current bandwidth value to the adjustment request, and sending the adjustment request to the backhaul node, so that the backhaul node can adjust a backhaul bandwidth in the backhaul resource based on the expected current bandwidth value.

One or more of the foregoing technical solutions in the embodiments of this application have at least the following technical effects:
A mobile node obtains operating status information of a current operating status of the mobile node, and correspondingly sends an adjustment request to a backhaul node according to the operating status information of the mobile node, to obtain a backhaul resource used to adjust a backhaul link between the mobile node and the backhaul node, and then adjusts the backhaul link based on the backhaul resource, so that the backhaul link correspondingly satisfies a data forwarding requirement of the mobile network node in the current operating status in a movement scenario, which resolves a technical problem in the prior art that a backhaul link cannot satisfy a data forwarding requirement of a mobile network node in a movement scenario and improves performance of the mobile node in forwarding data to the backhaul node.

### BRIEF DESCRIPTION OF DRAWINGS

FIG. 1 is a structural block diagram of a mobile device according to Embodiment 1 of the present invention;
FIG. 2 is a schematic flowchart of a backhaul link adjustment method according to Embodiment 1 of the present invention;
FIG. 3 is a schematic diagram of a process of establishing a new backhaul link in a movement process according to Embodiment 1 of the present invention;
FIG. 4 is a schematic diagram of a process of adjusting an established backhaul link according to an access service according to Embodiment 1 of the present invention;
FIG. 5 is a schematic diagram of a process of establishing a new backhaul link according to a change of an access service according to Embodiment 1 of the present invention;
FIG. 6 is a schematic diagram of a process of adjusting an established backhaul link when a new node performs accessing according to Embodiment 1 of the present invention;
FIG. 7 is a schematic diagram of a process of adjusting an established backhaul link according to electricity quantity information according to Embodiment 1 of the present invention; and
FIG. 8 is a structural block diagram of a backhaul link adjustment system according to Embodiment 2 of the present invention.

### DESCRIPTION OF EMBODIMENTS

In technical solutions provided in the embodiments of this application, a mobile node requests to obtain a corresponding backhaul resource from a backhaul node according to an operating status of the mobile node, and adjusts a backhaul link according to the obtained backhaul resource, so that the backhaul link correspondingly satisfies a data forwarding requirement of the mobile network node in the current operating status in a movement scenario, which resolves a technical problem in the prior art that a backhaul link cannot satisfy a data forwarding requirement of a mobile network node in a movement scenario and improves performance of the mobile node in forwarding data to the backhaul node.

A main implementation principle and specific implementation manners of the technical solutions of this application and corresponding beneficial effects that can be achieved are described in detail below with reference to the accompanying drawings.

### Embodiment 1

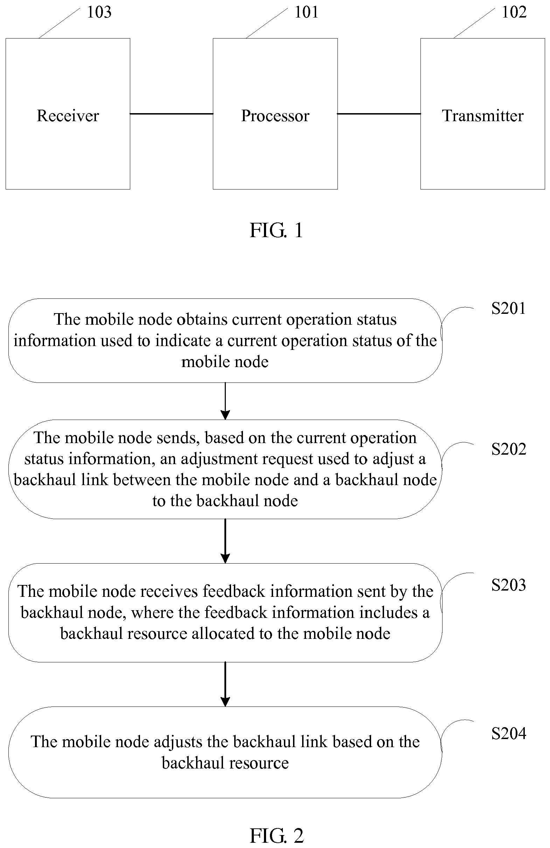

Referring to FIG. 1, an embodiment of this application provides a mobile device, where the mobile device includes:
a processor 101, configured to obtain current operating status information that indicates a current operating status of the mobile node;
a transmitter 102, configured to send, based on the current operating status information, an adjustment request used to adjust a backhaul link between the mobile node and a backhaul node to the backhaul node; and
a receiver 103, configured to receive feedback information sent by the backhaul node, where the feedback information includes a backhaul resource allocated to the mobile node, where
the processor 101 is further configured to adjust the backhaul link based on the backhaul resource.

Further, before the sending, based on the current operating status information, an adjustment request used to adjust a backhaul link to a backhaul node, the receiver 103 is further configured to receive a movement instruction sent by a server, and determine a current location, a current movement speed, and a current movement direction of the mobile node; and
the processor 101 is further configured to obtain, based on the current location, the current movement speed, and the current movement direction, at least one candidate backhaul node whose distance from the mobile node is less than or equal to a specified threshold in a movement process; and determine, based on the current operating status information, the backhaul node in the at least one candidate backhaul node.

The current operating status information obtained by the processor 101 specifically includes at least one of the following information: current quality of service information, current service traffic information, current bandwidth requirement information, and current electricity quantity information of the mobile node. When the current operating status information is the current electricity quantity information, the processor 101 is further configured to obtain current remaining work time corresponding to the current electricity quantity information and a expected current bandwidth value corresponding to the current remaining work time; and add the expected current bandwidth value to the adjustment request; and the transmitter 102 sends, to the backhaul node, the adjustment request that carries the expected current bandwidth value, so that the backhaul node can adjust a backhaul bandwidth in the backhaul resource based on the expected current bandwidth value.

The mobile device provided in this embodiment of this application is a mobile node. When the backhaul link is not established between the backhaul node and the mobile device, the processor 101 of the mobile device may adjust the backhaul link based on the backhaul resource, for example, establish a new backhaul link to the backhaul node; or when the backhaul link is established between the backhaul node and the mobile device, the processor 101 of the mobile device may also adjust the backhaul link based on the backhaul resource, for example, adjust a bandwidth of the backhaul link established between the mobile device and the backhaul node.

Referring to FIG. 2, corresponding to the foregoing mobile device, that is, the mobile node, an embodiment of this application further provides a backhaul link adjustment method applied to the mobile node, where the method includes:
S201: The mobile node obtains current operating status information used to indicate a current operating status of the mobile node.
S202: The mobile node sends, based on the current operating status information, an adjustment request used to adjust a backhaul link between the mobile node and a backhaul node to the backhaul node.
S203: The mobile node receives feedback information sent by the backhaul node, where the feedback information includes a backhaul resource allocated to the mobile node.
S204: The mobile node adjusts the backhaul link based on the backhaul resource.

In a specific implementation process, the mobile node may be a mobile access point (Access Point, AP) in the wireless communications field, or may be a relay node (Relay Node, RN) in the wireless communications field. The current operating status of the mobile node includes quality of service (Quality of Service, QoS), service traffic, a bandwidth requirement during data backhaul, an electricity quantity, and the like of the mobile node. Correspondingly, the current operating status information that indicates the current operating status of the mobile node may include at least one of the following information: current quality of service information, current service traffic information, current bandwidth requirement information, and current electricity quantity information of the mobile node. Due to a reason such as a location change or a change of an access service, a current operating status of the mobile node may change correspondingly. When being in different current operating statuses, the mobile node needs different backhaul links to transmit data to a network, and therefore, the mobile node performs S201 of obtaining current operating status information of the mobile node.

After obtaining the current operating status information of the mobile node, the mobile node performs S202 of sending the adjustment request to the backhaul node based on the current operating status information. Specifically, the mobile node may obtain, through calculation according to the current movement status information, a backhaul resource that is needed when the mobile node transmits data to the backhaul node by using the backhaul link, for example, a bandwidth size of the backhaul link, and then add, to the adjustment request sent to the backhaul node, information about the backhaul resource used to adjust the backhaul link. Certainly, the mobile node may also add the current operating status information to the adjustment request, and send the adjustment request to the backhaul node, so that the backhaul node obtains, through calculation according to the current operating status information of the mobile node, the backhaul resource needed by the mobile node. This embodiment of this application is not limited to a case in which the backhaul resource is obtained by the mobile node through calculation.

Correspondingly, after receiving the adjustment request of the mobile node, the backhaul node allocates the backhaul resource to the mobile node in response to the adjustment request of the mobile node, adds, to feedback information, the backhaul resource allocated by the backhaul node, and sends the feedback information to the mobile node. Next, the mobile node performs S203 of receiving the feedback information sent by the backhaul node, and further performs S204 of adjusting the backhaul link based on the backhaul resource allocated by the backhaul node. There are the following two optional implementation manners:
1. When the backhaul link is not established between the backhaul node and the mobile node, when adjusting the backhaul link based on the backhaul resource, the mobile node may specifically establish, based on the backhaul resource, a new link between mobile node and the backhaul node as the backhaul link.
2. When the backhaul link is established between the backhaul node and the mobile node, when adjusting the backhaul link based on the backhaul resource, the mobile node may specifically adjust a bandwidth of the established backhaul link based on the backhaul resource.

In this embodiment of this application, before sending, based on the current operating status information, the adjustment request used to adjust the backhaul link to the backhaul node, the mobile node further receives a movement instruction sent by a server, and determines a current location, a current movement speed, and a current movement direction of the mobile node; then obtains, based on the current location, the current movement speed, and the current movement direction, at least one candidate backhaul node whose distance from the mobile node is less than or equal to a specified threshold in a movement process of the mobile node; and further determines, based on the current operating status information, the backhaul node in the at least one candidate backhaul node. The specified threshold may be a maximum value of signal coverage of the mobile node, so that each of the at least one obtained candidate backhaul node is within the coverage of the mobile node. In the movement process, the mobile node selects the backhaul node according to the determined current location, current movement speed, and current movement direction of the mobile node. In this way, each selected backhaul node is on a movement path of the mobile node, so that a feedback on the adjustment request of the mobile node in the movement process can be provided in time, so as to quickly establish a new backhaul link.

Specifically, the mobile node may predict a location of the mobile node at a next moment based on the current location, the current movement speed, and the current movement direction of the mobile node, to determine at least one candidate backhaul node whose distance from the location of the mobile node at the next moment is less than or equal to the specified threshold. Further, when determining a backhaul node in the at least one candidate backhaul node, the mobile node may determine one backhaul node, or may determine multiple backhaul nodes. When the mobile node determines multiple backhaul nodes, the mobile node sends an adjustment request to the multiple backhaul nodes, so that the mobile node can select, according to backhaul resources fed back by the multiple backhaul nodes, to establish a new link to an optimal backhaul node, that is, a new backhaul link.

For example, the mobile node sends an adjustment request to both a backhaul node A and a backhaul node B. In a backhaul resource allocated by the backhaul node A to the mobile node, a bandwidth of a backhaul link is 0.1 M. In a backhaul resource allocated by the backhaul node B to the mobile node, a bandwidth of a backhaul link is 0.2 M. In this case, in a case in which other backhaul resources are the same, the mobile node selects to establish a new link to the backhaul node B whose bandwidth is larger, so as to better transmit data to a network.

The following describes the backhaul link adjustment method provided in the embodiment of this application with reference to different operating scenarios by using examples.

### 1. Establish a new backhaul link in a movement process.

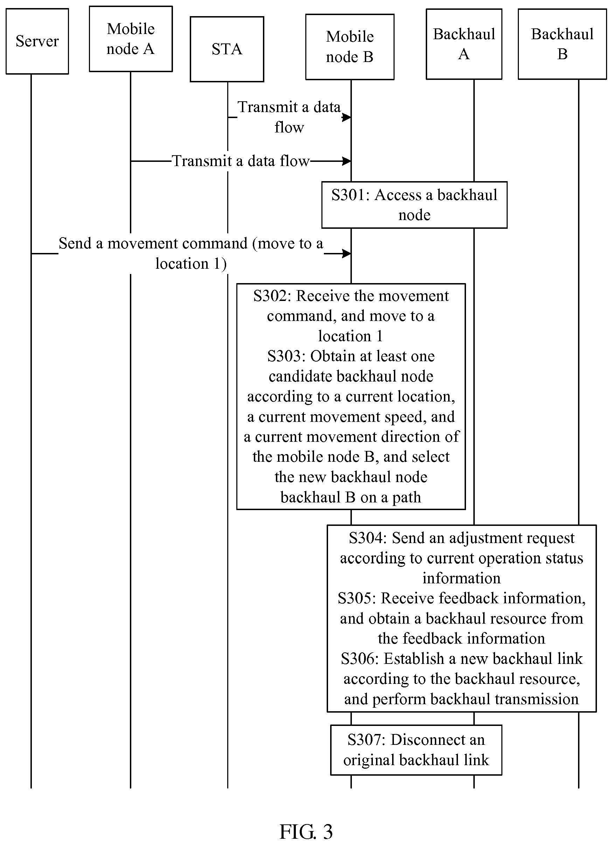

Referring to FIG. 3, both a terminal STA and a mobile node A access a network by using a mobile node B, and the mobile node B transmits data to the network by using a backhaul node backhaul A. The mobile node B receives, from a server, a movement command for requesting the mobile node B to move to a new location. In a movement process of the mobile node B, because of a location change, the backhaul node backhaul A is no longer suitable for the mobile node B to transmit data. Therefore, a better backhaul node needs to be selected to establish a new backhaul link. A specific implementation process of establishing a new backhaul link is as follows:
S301: The mobile node B accesses the backhaul node backhaul A.
S302: The mobile node B receives a movement command from a server, where the movement command requests the mobile node B to move to a new location location 1.
S303: The mobile node B determines a current location of the mobile node B, determines a movement speed and a movement direction according to location 1 and the current location, further determines at least one candidate backhaul node according to the current location, the movement speed, and the movement direction, and selects a backhaul node in the at least one candidate backhaul node.

For example, the mobile node predicts, according to the current location, the movement speed, and the movement direction, that a location at a next moment is location 2. The mobile node further learns, according to map information, at least one candidate backhaul node that the mobile node may access at the next moment, and determines, from the at least one candidate backhaul node, backhaul B as a backhaul node to which an adjustment request is to be sent.

S304: The mobile node B obtains current operating status information of the mobile node B, for example, current service traffic information, adds the current service traffic information to an adjustment request, sends the adjustment request to a backhaul node backhaul B, so that the backhaul node backhaul B allocates, according to the service traffic information in the adjustment request, a backhaul resource to the mobile node B after receiving the adjustment request.

S305: The mobile node B receives feedback information sent by the backhaul node backhaul B, and obtains the backhaul resource allocated by backhaul B from the feedback information.

S306: The mobile node B establishes a new backhaul link to the new backhaul node backhaul B according to the backhaul resource allocated by backhaul B, and performs transmission of backhaul data.

S307: The mobile node B disconnects a link to the original backhaul node backhaul A.

### 2. Adjust an established backhaul link according to a change of an access service.

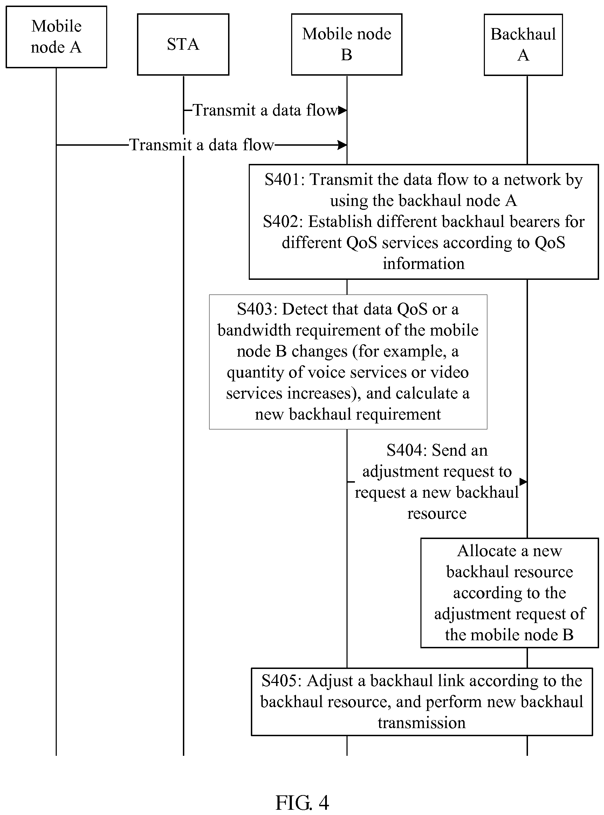

Referring to FIG. 4, both a terminal STA and a mobile node A access a network by using a mobile node B, and the mobile node B transmits data to the network by using a backhaul node backhaul A. The mobile node B may adjust an established backhaul link according to a change of an access service. A specific process is as follows:
S401: The mobile node B transmits a data flow of the terminal STA and/or the mobile node A to the network by using the backhaul node A.
S402: The mobile node B establishes different backhaul links for different QoS services according to service QoS information of the terminal STA and/or the mobile node A.
S403: The mobile node B detects that current operating status information, that is, data QoS or a bandwidth requirement, of the mobile node B changes (for example, a quantity of voice services or video services of the terminal STA and/or the mobile node A increases, which causes a change in the data QoS or the bandwidth requirement of the mobile node B), and calculates a new backhaul resource requirement (for example, a bandwidth threshold that satisfies a backhaul link of a current access service).
S404: The mobile node B initiates an adjustment request to the backhaul node backhaul A, where the adjustment request is used to request the backhaul node backhaul A to allocate a backhaul resource (for example, increase a bearer bandwidth of a voice service or increase a bearer bandwidth of a video service), so that the backhaul node backhaul A allocates a new backhaul resource to the mobile node B according to the adjustment request of the mobile node B, and sends the new backhaul resource to the mobile node B by using feedback information.
S405: The mobile node B receives the feedback information sent by the backhaul node backhaul A, obtains the backhaul resource included in the feedback information, adjusts, according to the backhaul resource, a backhaul link established between the mobile node B and the backhaul node backhaul A, and performs new backhaul transmission.

For example, the backhaul resource allocated by the backhaul node backhaul A to the mobile node B is a backhaul link whose bandwidth is 0.5 M, and bandwidths of backhaul links established between the mobile node B and the backhaul node backhaul A are 0.1 M and 0.2 M; in this case, the mobile node B may adjust the bandwidths of the backhaul links to 0.2 M and 0.4 M (for example, respectively increase the bearer bandwidth of the voice service to 0.2 M and increase the bearer bandwidth of the video service to 0.4 M).

### 3. Establish a new backhaul link according to a change of an access service.

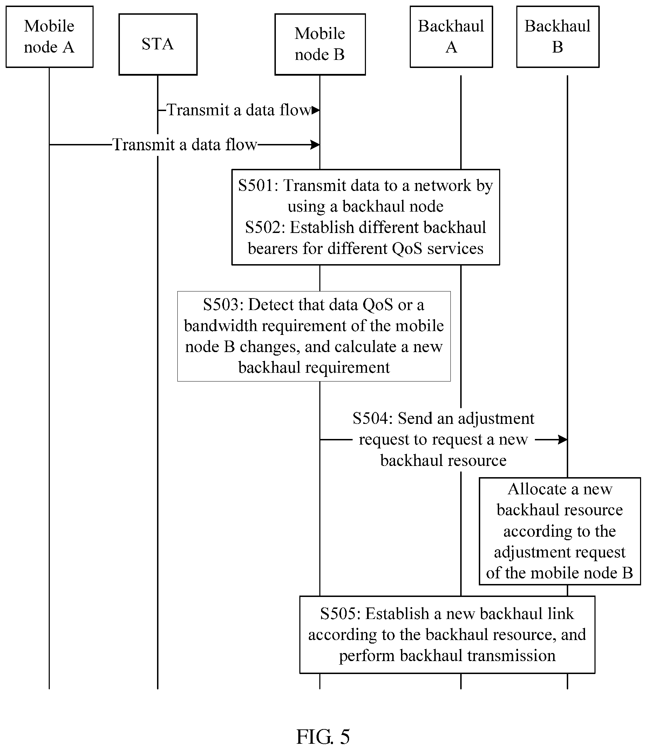

Referring to FIG. 5, both a terminal STA and a mobile node A access a network by using a mobile node B, and the mobile node B transmits data to the network by using a backhaul node backhaul A. The mobile node B may establish a new backhaul link according to a change of an access service. A specific process is as follows:
S501: The mobile node B transmits data of the terminal STA and/or the mobile node A to the network by using the backhaul node A.
S502: The mobile node B establishes different backhaul bearers for different QoS services according to service QoS information of the terminal STA and/or the mobile node A.
S503: The mobile node B detects that current operating status information, that is, data QoS or a bandwidth requirement, of the mobile node B changes (for example, a quantity of voice services or video services of the terminal STA and/or the mobile node A increases, which causes a change in the data QoS or the bandwidth requirement of the mobile node B), and calculates a new backhaul resource requirement (for example, a bandwidth threshold that satisfies a backhaul link of a current access service), but currently, the backhaul node A cannot allocate a new backhaul resource.
S504: The mobile node B initiates an adjustment request to a backhaul node backhaul B, where the adjustment request is used to request the backhaul node backhaul B to allocate a backhaul resource, to increase bearer bandwidths of a voice service and a video service, so that the backhaul node backhaul B allocates a new backhaul resource to the mobile node B according to the adjustment request of the mobile node B, and sends the new backhaul resource to the mobile node B by using feedback information.
S505: The mobile node B receives the feedback information sent by the backhaul node backhaul B, obtains the backhaul resource included in the feedback information, establishes a new backhaul link to the backhaul node backhaul B according to the backhaul resource, and performs new backhaul transmission.

For example, the backhaul node backhaul B allocates a new backhaul resource to the mobile node B: a new backhaul link whose bandwidth is 0.3 M. Therefore, the mobile node B establishes a new backhaul link whose bandwidth is 0.3 M to the backhaul node backhaul B, to transmit an added voice service and an added video service to the network.

### 4. Adjust an established backhaul link when a new node performs accessing.

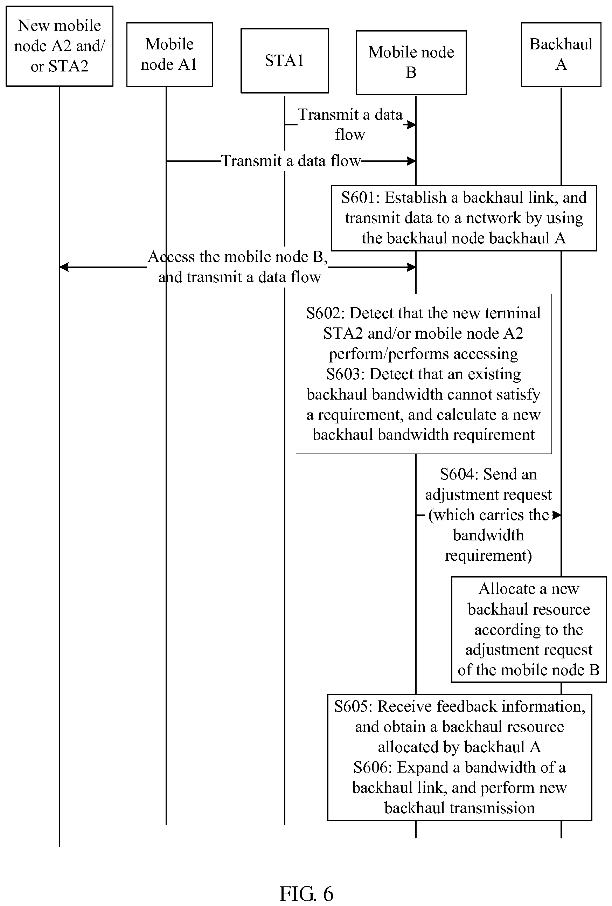

Referring to FIG. 6, both a terminal STA1 and a mobile node A1 access a network by using a mobile node B, and the mobile node B transmits data to the network by using a backhaul node backhaul A. If a new terminal STA2 and/or mobile node A2 access/accesses the mobile node B, the mobile node B may need to adjust an established backhaul link. A specific execution process is as follows:
S601: The mobile node B establishes a backhaul link to backhaul A, and transmits, to the network by using the backhaul node backhaul A, data sent by the terminal STA1 and the mobile node A1.
S602: The mobile node B detects that the new terminal STA2 and/or mobile node A2 perform/performs accessing.
S603: The mobile node B obtains current bandwidth requirement information and/or current traffic information of the mobile node B, where the current bandwidth requirement information and/or the current traffic information indicate/indicates that a bandwidth of an established backhaul link of the mobile node B cannot already satisfy a requirement, and obtains a new bandwidth requirement through calculation.
S604: The mobile node B initiates an adjustment request to the backhaul node backhaul A, where the adjustment request carries the new bandwidth requirement and is used to request a new backhaul resource, so that backhaul A allocates a new backhaul resource to the mobile node B after receiving the adjustment request, and sends, to the mobile node B, feedback information that carries the backhaul resource.
S605: The mobile node B receives the feedback information of the backhaul node backhaul A, and obtains, from the feedback information, the backhaul resource allocated by backhaul A.
S606: The mobile node B adjusts, according to the backhaul resource, the backhaul link established between the mobile node B and backhaul A, to expand a bandwidth of the backhaul link according to the backhaul resource, and performs new backhaul transmission.

### 5. Adjust an established backhaul link according to current information.

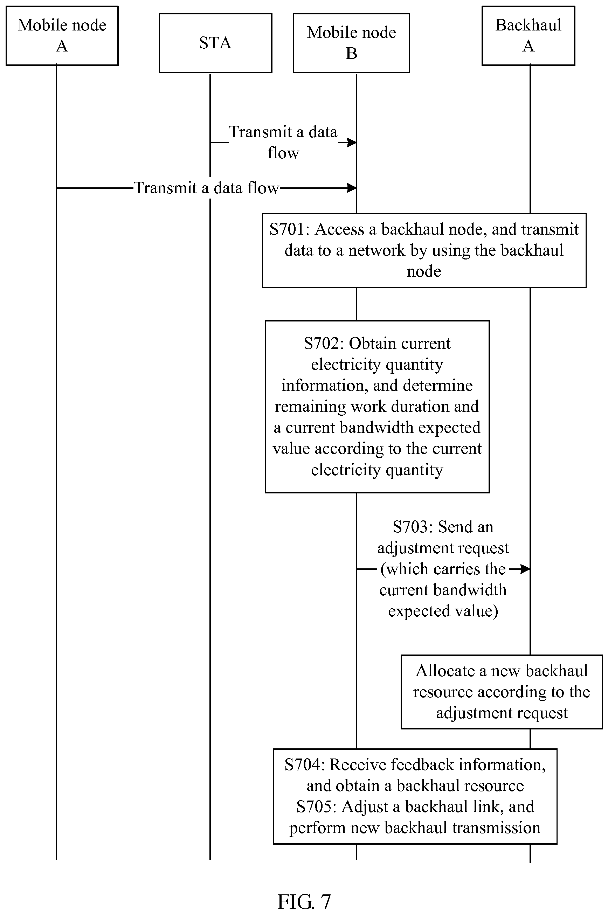

Referring to FIG. 7, both a terminal STA and a mobile node A access a network by using a mobile node B, and the mobile node B transmits data to the network by using a backhaul node backhaul A. Because a quantity of electricity stored in the mobile node B is limited, a case of electricity insufficiency may occur in a work process. In the case of electricity insufficiency, the mobile node performs the following steps to transmit data that is to be transmitted in the future.

S701: The mobile node B accesses the backhaul node backhaul A, and transmits data of the terminal STA and/or the mobile node A to the network by using the backhaul node backhaul A.

S702: The mobile node B obtains current electricity quantity information of the mobile node B, and obtains current remaining work time corresponding to the current electricity quantity information and a expected current bandwidth value corresponding to the current remaining work time. Preferably, the mobile node B may calculate remaining work time of the mobile node B and a corresponding backhaul bandwidth expected value when the current electricity quantity information indicates that electricity in the mobile node B is insufficient.

S703: The mobile node B adds the expected current bandwidth value to an adjustment request, and sends the adjustment request to the backhaul node backhaul A, so that the backhaul node backhaul A can adjust a backhaul bandwidth in a backhaul resource based on the expected current bandwidth value, and correspondingly send, to the mobile node B, feedback information that carries the backhaul resource.

S704: The mobile node B receives the feedback information sent by the backhaul node backhaul A, and obtains, from the feedback information, the backhaul resource allocated by the backhaul node backhaul A.

S705: The mobile node B adjusts a backhaul link between the mobile node B and the backhaul node backhaul A based on the backhaul resource in the backhaul resource (for example, adjusts a bandwidth of the established backhaul link to the expected current bandwidth value), and performs new backhaul transmission.

### Embodiment 2

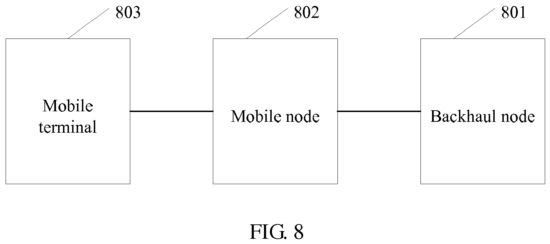

Referring to FIG. 8, an embodiment of this application provides a backhaul link adjustment system, where the system includes:
a backhaul node 801; and
a mobile node 802, connected to the backhaul node 801 and a mobile terminal 803, where the mobile node transmits, to a network by using the backhaul node, data sent by the mobile terminal, where
the mobile node 802 is configured to: obtain current operating status information used to indicate a current operating status of the mobile node; send, based on the current operating status information, an adjustment request used to adjust a backhaul link between the mobile node and the backhaul node 801 to the backhaul node 801; receive feedback information sent by the backhaul node 801, where the feedback information includes a backhaul resource allocated to the mobile node 802; and adjust the backhaul link based on the backhaul resource.

In a specific implementation process, before sending, based on the current operating status information, the adjustment request used to adjust the backhaul link to the backhaul node, the mobile node 802 is further configured to receive a movement instruction sent by a server, and determine a current location, a current movement speed, and a current movement direction of the mobile node; obtain, based on the current location, the current movement speed, and the current movement direction, at least one candidate backhaul node whose distance from the mobile node is less than or equal to a specified threshold in a movement process; and determine, based on the current operating status information, the backhaul node 801 in the at least one candidate backhaul node.

The current operating status information specifically includes at least one of the following information: current quality of service information, current service traffic information, current bandwidth requirement information, or current electricity quantity information of the mobile node.

In a specific implementation process, when the current operating status information is the current electricity quantity information, the sending, based on the current operating status information, an adjustment request for adjusting a backhaul link to the backhaul node 801 specifically includes: obtaining, by the mobile node 802, current remaining work time corresponding to the current electricity quantity information and a expected current bandwidth value corresponding to the current remaining work time; and adding, by the mobile node 802, the expected current bandwidth value to the adjustment request, and sending the adjustment request to the backhaul node 801, so that the backhaul node 801 can adjust a backhaul bandwidth in the backhaul resource based on the expected current bandwidth value.

In a specific implementation process, when the backhaul link is not established between the backhaul node 801 and the mobile node 802, the mobile node 802 adjusts the backhaul link based on the backhaul resource, for example, establishes a new backhaul link to the backhaul node 801; or when the backhaul link is established between the backhaul node 801 and the mobile node 802, the mobile node 802 adjusts the backhaul link based on the backhaul resource, for example, adjusts a bandwidth of the established backhaul link.

Various variation manners and specific examples of the mobile device and the backhaul link adjustment method in the embodiments in FIG. 1 to FIG. 7 are also applicable to the backhaul link adjustment system in this embodiment. According to the foregoing detailed descriptions of the mobile device and the backhaul link adjustment method, a person skilled in the art can clearly know an implementation method of the backhaul link adjustment system in this embodiment, which is not described in detail for brevity of this specification.

One or more of the foregoing technical solutions in the embodiments of this application can implement the following technical effects:
A mobile node obtains operating status information of a current operating status of the mobile node, and correspondingly sends an adjustment request to a backhaul node according to the operating status information of the mobile node, to obtain a backhaul resource used to adjust a backhaul link between the mobile node and the backhaul node, and then adjusts the backhaul link based on the backhaul resource, so that the backhaul link correspondingly satisfies a data forwarding requirement of the mobile network node in the current operating status in a movement scenario, which resolves a technical problem in the prior art that a backhaul link cannot satisfy a data forwarding requirement of a mobile network node in a movement scenario and improves performance of the mobile node in forwarding data to the backhaul node.

A person skilled in the art should understand that the embodiments of the present invention may be provided as a method, a system, or a computer program product. Therefore, the present invention may use a form of hardware only embodiments, software only embodiments, or embodiments with a combination of software and hardware. In addition, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to the present invention without departing from the scope of the present invention. The present invention is intended to cover these modifications and variations provided that they fall within the scope of protection defined by the following claims and their equivalent technologies.

## Claims

1. A mobile node, wherein the mobile node comprises:
a processor (101), configured to obtain current operating status information that indicates a current operating status of the mobile node;
a transmitter (102), configured to send, based on the current operating status information, an adjustment request used to adjust a backhaul link between the mobile node and a backhaul node to the backhaul node; and
a receiver (103), configured to receive feedback information sent by the backhaul node, wherein the feedback information comprises a backhaul resource allocated to the mobile node, wherein
the processor is further configured to adjust the backhaul link based on the backhaul resource; and
wherein the mobile node is **characterized in that**
the receiver is further configured to receive a movement instruction sent by a server, and determine a current location, a current movement speed, and a current movement direction of the mobile node; and
the processor is further configured to obtain, based on the current location, the current movement speed, and the current movement direction, at least one candidate backhaul node whose distance from the mobile node is less than or equal to a specified threshold in a movement process of the mobile node; and determine, based on the current operating status information, the backhaul node from the at least one candidate backhaul node.

2. The mobile node according to claim 1, wherein the current operating status information specifically comprises at least one of the following information:
current quality of service information, current service traffic information, current bandwidth requirement information, or current electricity quantity information of the mobile node.

3. The mobile node according to any one of claims 1 or 2, wherein when the current operating status information is the current electricity quantity information, the processor is further configured to obtain current remaining work time corresponding to the current electricity quantity information and a expected current bandwidth value corresponding to the current remaining work time; and add the expected current bandwidth value to the adjustment request; and
the transmitter is specifically configured to send, to the backhaul node, the adjustment request that carries the expected current bandwidth value, so that the backhaul node can adjust a backhaul bandwidth in the backhaul resource based on the expected current bandwidth value.

4. A backhaul link adjustment method, applied to a mobile node, wherein the method comprises:
obtaining (201), by the mobile node, current operating status information used to indicate a current operating status of the mobile node;
sending (202), by the mobile node based on the current operating status information, an adjustment request used to adjust a backhaul link between the mobile node and a backhaul node to the backhaul node;
receiving (203), by the mobile node, feedback information sent by the backhaul node, wherein the feedback information comprises a backhaul resource allocated to the mobile node; and
adjusting (204), by the mobile node, the backhaul link based on the backhaul resource; and
wherein before the sending, by the mobile node based on the current operating status information, an adjustment request used to adjust a backhaul link to a backhaul node, the method is **characterized in**:
receiving (302), by the mobile node, a movement instruction sent by a server, and determining a current location, a current movement speed, and a current movement direction of the mobile node;
obtaining (303), by the mobile node based on the current location, the current movement speed, and the current movement direction, at least one candidate backhaul node whose distance from the mobile node is less than or equal to a specified threshold in a movement process of the mobile node; and
determining, by the mobile node based on the current operating status information, the backhaul node from the at least one candidate backhaul node.

5. The method according to claim 4, wherein the current operating status information specifically comprises at least one of the following information:
current quality of service information, current service traffic information, current bandwidth requirement information, or current electricity quantity information of the mobile node.

6. The method according to claims 4 or 5, wherein when the current operating status information is the current electricity quantity information, the sending, by the mobile node based on the current operating status information, an adjustment request for adjusting a backhaul link to a backhaul node specifically comprises:
obtaining, by the mobile node, current remaining work time corresponding to the current electricity quantity information and a expected current bandwidth value corresponding to the current remaining work time; and
adding, by the mobile node, the expected current bandwidth value to the adjustment request, and sending the adjustment request to the backhaul node, so that the backhaul node can adjust a backhaul bandwidth in the backhaul resource based on the expected current bandwidth value.

7. A backhaul link adjustment system, wherein the system comprises:
a backhaul node (801); and
a mobile node (802), connected to the backhaul node and a mobile terminal (803), wherein the mobile node transmits, to a network by using the backhaul node, data sent by the mobile terminal, wherein
the mobile node is configured according to claim 1.

8. The system according to claim 7, wherein the current operating status information specifically comprises at least one of the following information:
current quality of service information, current service traffic information, current bandwidth requirement information, or current electricity quantity information of the mobile node.

9. The system according to claims 7 or 8, wherein when the current operating status information is the current electricity quantity information, the sending, based on the current operating status information, an adjustment request for adjusting a backhaul link to the backhaul node specifically comprises:
obtaining, by the mobile node, current remaining work time corresponding to the current electricity quantity information and a expected current bandwidth value corresponding to the current remaining work time; and
adding, by the mobile node, the expected current bandwidth value to the adjustment request, and sending the adjustment request to the backhaul node, so that the backhaul node can adjust a backhaul bandwidth in the backhaul resource based on the expected current bandwidth value.

## Patentansprüche

1. Mobiler Knoten, wobei der mobile Knoten umfasst:
einen Prozessor (101), konfiguriert zum Beschaffen aktueller Betriebsstatusinformationen, die einen aktuellen Betriebsstatus des mobilen Knotens anzeigen;
einen Sender (102), konfiguriert zum Versand einer Anpassungsanfrage, die verwendet wird, um einen Backhaul-Link zwischen dem mobilen Knoten und einem Backhaul-Knoten an den Backhaul-Knoten anzupassen, basierend auf den aktuellen Betriebsstatusinformationen; und
einen Empfänger (103), konfiguriert zum Empfangen von Feedbackinformationen, die durch den Backhaul-Knoten gesendet werden, wobei die Feedbackinformationen eine Backhaul-Ressource umfassen, die dem mobilen Knoten zugewiesen ist, wobei der Prozessor ferner konfiguriert ist zum Anpassen des Backhaul-Links basierend auf der Backhaul-Ressource; und
wobei der mobile Knoten **dadurch gekennzeichnet ist, dass**
der Empfänger ferner zum Empfangen einer Bewegungsanweisung, die durch einen Server gesendet wird und zum Bestimmen eines aktuellen Orts, einer aktuellen Bewegungsgeschwindigkeit und einer aktuellen Bewegungsrichtung des mobilen Knotens, konfiguriert ist; und
der Prozessor ferner zum Beschaffen von mindestens einem Kandidaten-Backhaul-Knoten, dessen Abstand von dem mobilen Knoten weniger als oder gleich einem vorgegebenen Grenzwert in einem Bewegungsprozess des mobilen Knotens ist, basierend auf dem aktuellen Ort, der aktuellen Bewegungsgeschwindigkeit und der aktuellen Bewegungsrichtung konfiguriert ist;
und Bestimmung des Backhaul-Knotens von dem mindestens einen Kandidaten-Backhaul-Knoten basierend auf den aktuellen Betriebsstatusinformationen.

2. Mobiler Knoten nach Anspruch 1, wobei die aktuellen Betriebsstatusinformationen speziell eine der folgenden Informationen umfassen:
aktuelle Servicequalitätsinformationen, aktuelle Serviceverkehrsinformationen, aktuelle Bandbreitenanforderungsinformationen oder aktuelle Elektrizitätsmengeninformationen des mobilen Knotens.

3. Mobiler Knoten nach einem der Ansprüche 1 oder 2, wobei der Prozessor, wenn die aktuellen Betriebsstatusinformationen die aktuellen Elektrizitätsmengeninformationen sind, ferner zum Beschaffen aktueller verbleibender Arbeitszeit, die den aktuellen Elektrizitätsmengeninformationen entspricht, und eines erwarteten aktuellen Bandbreitenwerts, der der aktuell verbleibenden Arbeitszeit entspricht, konfiguriert ist; und Hinzufügen des erwarteten aktuellen Bandbreitenwerts zu der Anpassungsanfrage; und
der Sender speziell zum Versand der Anpassungsanfrage, die den erwarteten Bandbreitenwert trägt, an den Backhaul-Knoten konfiguriert ist, sodass der Backhaul-Knoten eine Backhaul-Bandbreite in der Backhaul-Ressource auf dem erwarteten aktuellen Bandbreitenwert basierend einstellen kann.

4. Backhaul-Link-Anpassungsverfahren, angewendet auf einen mobilen Knoten, wobei das Verfahren umfasst:
Beschaffung (201) aktueller Betriebsstatusinformationen, die verwendet werden, um einen aktuellen Betriebsstatus des mobilen Knotens anzuzeigen, durch den mobilen Knoten;
Versand (202) einer Anpassungsanfrage, die verwendet wird, um einen Backhaul-Link zwischen dem mobilen Knoten und einem Backhaul-Knoten an den Backhaul-Knoten anzupassen, durch den mobilen Knoten basierend auf den aktuellen Betriebsstatusinformationen;
Empfang (203) von durch den Backhaul-Knoten gesendeten Feedbackinformationen durch den mobilen Knoten, wobei die Feedbackinformationen eine Backhaul-Ressource umfassen, die dem mobilen Knoten zugewiesen ist; und
Anpassung (204) des Backhaul-Links basierend auf der Backhaul-Ressource durch den mobilen Knoten; und
wobei das Verfahren vor dem Versand durch den mobilen Knoten basierend auf den aktuellen Betriebsstatusinformationen eine Anpassungsanfrage verwendet wird, um einen Backhaul-Link an einen Backhaul-Knoten anzupassen, **gekennzeichnet ist durch**:
Empfang (302) einer Bewegungsanweisung, die **durch** einen Server gesendet wird, **durch** den mobilen Knoten, und Bestimmung eines aktuellen Orts, einer aktuellen Bewegungsgeschwindigkeit und einer aktuellen Bewegungsrichtung des mobilen Knotens;
Beschaffung (303) von mindestens einem Kandidaten-Backhaul-Knoten, dessen Abstand von dem mobilen Knoten weniger als oder gleich einem vorgegebenen Grenzwert in einem Bewegungsprozess des mobilen Knotens ist, **durch** den mobilen Knoten basierend auf dem aktuellen Ort, der aktuellen Bewegungsgeschwindigkeit und der aktuellen Bewegungsrichtung; und
Bestimmung des Backhaul-Knotens von dem mindestens einen Kandidaten-Backhaul-Knoten **durch** den mobilen Knoten basierend auf den aktuellen Betriebsstatusinformationen.

5. Verfahren nach Anspruch 4, wobei die aktuellen Betriebsstatusinformationen speziell eine der folgenden Informationen umfassen:
aktuelle Servicequalitätsinformationen, aktuelle Serviceverkehrsinformationen, aktuelle Bandbreitenanforderungsinformationen oder aktuelle Elektrizitätsmengeninformationen des mobilen Knotens.

6. Verfahren nach Anspruch 4 oder 5, wobei, wenn die aktuellen Betriebsstatusinformationen die aktuellen Elektrizitätsmengeninformationen sind, der Versand einer Anpassungsanfrage zur Anpassung eines Backhaul-Links an einen Backhaul-Knoten durch den mobile Knoten basierend auf den aktuellen Betriebsstatusinformationen speziell umfasst:
Beschaffung der aktuell verbleibenden Arbeitszeit, die den aktuellen Elektrizitätsmengeninformationen entspricht, und eines erwarteten aktuellen Bandbreitenwerts, der der aktuell verbleibenden Arbeitszeit entspricht, durch den mobilen Knoten; und
Hinzufügen des erwarteten aktuellen Bandbreitenwerts durch den mobilen Knoten zu der Anpassungsanfrage und Versand der Anpassungsanfrage an den Backhaul-Knoten, sodass der Backhaul-Knoten eine Backhaul-Bandbreite in der Backhaul-Ressource basierend auf dem erwarteten aktuellen Bandbreitenwert anpassen kann.

7. Backhaul-Link-Anpassungssystem, wobei das System umfasst:
einen Backhaul-Knoten (801); und
einen mobilen Knoten (802), der mit dem Backhaul-Knoten und einem mobilen Terminal (803) verbunden ist,
wobei der mobile Knoten durch Verwendung des Backhaul-Knotens Daten an ein Netz überträgt, die durch das mobile Terminal gesendet werden, wobei der mobile Knoten nach Anspruch 1 konfiguriert ist.

8. System nach Anspruch 7, wobei die aktuellen Betriebsstatusinformationen speziell eine der folgenden Informationen umfassen:
aktuelle Servicequalitätsinformationen, aktuelle Serviceverkehrsinformationen, aktuelle Bandbreitenanforderungsinformationen oder aktuelle Elektrizitätsmengeninformationen des mobilen Knotens.

9. System nach Anspruch 7 oder 8, wobei, wenn die aktuellen Betriebsstatusinformationen die aktuellen Elektrizitätsmengeninformationen sind, der Versand einer Anpassungsanfrage zur Anpassung eines Backhaul-Link an den Backhaul-Knoten basierend auf den aktuellen Betriebsstatusinformationen speziell umfasst:
Beschaffung der aktuell verbleibenden Arbeitszeit, die den aktuellen Elektrizitätsmengeninformationen entspricht, und eines erwarteten aktuellen Bandbreitenwerts, der der aktuell verbleibenden Arbeitszeit entspricht, durch den mobilen Knoten; und
Hinzufügen des erwarteten aktuellen Bandbreitenwerts durch den mobilen Knoten zu der Anpassungsanfrage und Versand der Anpassungsanfrage an den Backhaul-Knoten, sodass der Backhaul-Knoten eine Backhaul-Bandbreite in der Backhaul-Ressource basierend auf dem erwarteten aktuellen Bandbreitenwert anpassen kann.

## Revendications

1. Noeud mobile, le noeud mobile comprenant :
un processeur (101), configuré pour obtenir des informations d'état de fonctionnement en cours qui indiquent un état de fonctionnement en cours du noeud mobile ;
un émetteur (102), configuré pour envoyer, sur la base des informations d'état de fonctionnement en cours, une requête de réglage utilisée pour régler une liaison terrestre entre le noeud mobile et un noeud terrestre au noeud terrestre ; et
un récepteur (103), configuré pour recevoir des informations de retour envoyées par le noeud terrestre, les informations de retour comprenant une ressource terrestre allouée au noeud mobile, dans lequel
le processeur est également configuré pour régler la liaison terrestre sur la base de la ressource terrestre ; et
le noeud mobile étant **caractérisé en ce que**
le récepteur est également configuré pour recevoir une instruction de déplacement envoyée par un serveur, et déterminer un emplacement en cours, une vitesse de déplacement en cours, et une direction de déplacement en cours du noeud mobile ; et
le processeur est également configuré pour obtenir, sur la base de l'emplacement en cours, de la vitesse de déplacement en cours, et de la direction de déplacement en cours, au moins un noeud terrestre candidat dont la distance depuis le noeud mobile est inférieure ou égale à un seuil spécifié dans un processus de déplacement du noeud mobile ;
et déterminer, sur la base des informations d'état de fonctionnement en cours, le noeud terrestre à partir de l'au moins un noeud terrestre candidat.

2. Noeud mobile selon la revendication 1, dans lequel les informations d'état de fonctionnement en cours comprennent spécifiquement au moins une des informations suivantes :
informations de qualité de service en cours, informations de trafic de service en cours, informations d'exigence de bande passante en cours, ou informations de quantité d'électricité en cours du noeud mobile.

3. Noeud mobile selon l'une quelconque des revendications 1 ou 2, dans lequel, quand les informations d'état de fonctionnement en cours sont les informations de quantité d'électricité en cours, le processeur est également configuré pour obtenir un temps de travail restant en cours correspondant aux informations de quantité d'électricité en cours et une valeur de bande passante en cours prévue correspondant au temps de travail restant en cours ; et ajouter la valeur de bande passante en cours prévue à la requête de réglage ; et
l'émetteur est spécifiquement configuré pour envoyer, au noeud terrestre, la requête de réglage qui transporte la valeur de bande passante en cours prévue, de telle sorte que le noeud terrestre peut régler une bande passante terrestre dans la ressource terrestre sur la base de la valeur de bande passante en cours prévue.

4. Procédé de réglage de liaison terrestre, appliqué à un noeud mobile, le procédé comprenant :
l'obtention (201), par le noeud mobile, d'informations d'état de fonctionnement en cours utilisées pour indiquer un état de fonctionnement en cours du noeud mobile ;
l'envoi (202), par le noeud mobile, sur la base des informations d'état de fonctionnement en cours, d'une requête de réglage utilisée pour régler une liaison terrestre entre le noeud mobile et un noeud terrestre au noeud terrestre ;
la réception (203), par le noeud mobile, d'informations de retour envoyées par le noeud terrestre, les informations de retour comprenant une ressource terrestre allouée au noeud mobile ; et
le réglage (204), par le noeud mobile, de la liaison terrestre sur la base de la ressource terrestre ; et
le procédé est caractérisé, avant l'envoi, par le noeud mobile, sur la base des informations d'état de fonctionnement en cours, d'une requête de réglage utilisée pour régler une liaison terrestre à un noeud terrestre, par :
la réception (302), par le noeud mobile, d'une instruction de déplacement envoyée par un serveur, et la détermination d'un emplacement en cours, d'une vitesse de déplacement en cours, et d'une direction de déplacement en cours du noeud mobile ;
l'obtention (303), par le noeud mobile, sur la base de l'emplacement en cours, de la vitesse de déplacement en cours, et de la direction de déplacement en cours, d'au moins un noeud terrestre candidat dont la distance depuis le noeud mobile est inférieure ou égale à un seuil spécifié dans un processus de déplacement du noeud mobile ; et
la détermination, par le noeud mobile, sur la base des informations d'état de fonctionnement en cours, du noeud terrestre à partir de l'au moins un noeud terrestre candidat.

5. Procédé selon la revendication 4, dans lequel les informations d'état de fonctionnement en cours comprennent spécifiquement au moins une des informations suivantes :
informations de qualité de service en cours, informations de trafic de service en cours, informations d'exigence de bande passante en cours, ou informations de quantité d'électricité en cours du noeud mobile.

6. Procédé selon les revendications 4 ou 5, dans lequel, quand les informations d'état de fonctionnement en cours sont les informations de quantité d'électricité en cours, l'envoi, par le noeud mobile, sur la base des informations d'état de fonctionnement en cours, d'une requête de réglage pour régler une liaison terrestre à un noeud terrestre comprend spécifiquement :
l'obtention, par le noeud mobile, d'un temps de travail restant en cours correspondant aux informations de quantité d'électricité en cours et d'une valeur de bande passante en cours prévue correspondant au temps de travail restant en cours ; et
l'ajout, par le noeud mobile, de la valeur de bande passante en cours prévue à la requête de réglage, et l'envoi de la requête de réglage au noeud terrestre, de telle sorte que le noeud terrestre peut régler une bande passante terrestre dans la ressource terrestre sur la base de la valeur de bande passante en cours prévue.

7. Système de réglage de liaison terrestre, le système comprenant :
un noeud terrestre (801) ; et
un noeud mobile (802), relié au noeud terrestre et à un terminal mobile (803), le noeud mobile transmettant à un réseau, en utilisant le noeud terrestre, des données envoyées par le terminal mobile, dans lequel
le noeud mobile est configuré selon la revendication 1.

8. Système selon la revendication 7, dans lequel les informations d'état de fonctionnement en cours comprennent spécifiquement au moins une des informations suivantes :
informations de qualité de service en cours, informations de trafic de service en cours, informations d'exigence de bande passante en cours, ou informations de quantité d'électricité en cours du noeud mobile.

9. Système selon les revendications 7 ou 8, dans lequel, quand les informations d'état de fonctionnement en cours sont les informations de quantité d'électricité en cours, l'envoi, sur la base des informations d'état de fonctionnement en cours, d'une requête de réglage pour régler une liaison terrestre au noeud terrestre comprend spécifiquement :
l'obtention, par le noeud mobile, d'un temps de travail restant en cours correspondant aux informations de quantité d'électricité en cours et d'une valeur de bande passante en cours prévue correspondant au temps de travail restant en cours ; et
l'ajout, par le noeud mobile, de la valeur de bande passante en cours prévue à la requête de réglage, et l'envoi de la requête de réglage au noeud terrestre, de telle sorte que le noeud terrestre peut régler une bande passante terrestre dans la ressource terrestre sur la base de la valeur de bande passante en cours prévue.
